# EUROPEAN PATENT SPECIFICATION

(11) **EP 3 249 208 B1**
(45) Date of publication and mention of the grant of the patent: **29.05.2019**
(21) Application number: 17170208.7
(22) Date of filing: 09.05.2017
(51) Int. Cl.: F02M 35/10, F16L 53/00, F01M 13/00, F01M 13/04

(54) **BLOWBY HEATER**
BLOWBY-HEIZUNG
RÉCHAUFFAGE DE GAZ DE CARTER

(30) Priority: 10.05.2016 LU 93065
(43) Date of publication of application: 29.11.2017
(73) Proprietor: Cebi Luxembourg S.A., 7327 Steinsel (LU)
(72) Inventor: Graziotin, Francis, 7327 Steinsel (LU)
(74) Representative: Office Freylinger

(56) References cited:
- EP-A1- 1 674 678
- DE-A1- 3 936 088
- DE-A1- 10 325 965
- JP-A- 2014 173 437
- JP-B1- 5 913 704

## Description

### Technical field

The present invention generally relates to the field of blowby heaters, in particular for a crankcase venting system in a combustion engine of an automobile vehicle.

### Background Art

"Blowby heaters" are devices which can be used in recent automobile vehicles with combustion engines in order to prevent leakage. During operation of the combustion engine, "blowby" gazes can leak between the cylinders and the combustions chambers and accumulate as blowby fluid in the crankcase of the combustion engine. This blowby fluid generally contains a mixture of gas, oil, water and other combustion elements and its accumulation can generate leakage outside of the engine. Recent combustion engines are constructed to re-inject said blowby fluid into the combustion engine, for example via the air inlet into the engine. The blowby heater can be used to heat the fluid as it is circulating towards the air inlet in order to improve the fluid flow, in particular in heavy winter conditions the blowby heater prevents the water contained in the fluid from freezing.

A blowby heater well known in the art comprises a Positive Temperature Coefficient (PTC) element as a heating source. The PTC is heating when crossed by an electrical current and it presents a variable resistance with its temperature for a heating power auto regulation. The construction of the blowby heater often requires a precise mounting of the electrical contact elements to the PTC plates in order to guarantee a heating regulation which is conform.

JP 2014 173437 and EP 1 674 678 disclose conventional designs of blowby heaters.

### Technical problem

The object of the present invention is to provide a blowby heater which is of simple and economic design and allows for an easy mounting.

This object is achieved by a blowby heater device as claimed in claim 1.

### General Description of the Invention

The invention relates to a blowby heater device for a fluid in a conductive conduit, said heater device comprising: a body with an inner space (preferably extending in a longitudinal direction) for accommodating the conduit, the body further comprising a heater cavity, preferably opened in the transversal direction. A heater assembly is mounted inside the heater cavity, the body being configured to provide a thermal coupling between the heater assembly and the conduit. The heater assembly comprises a case with a case bottom and a peripheral wall, a PTC heating plate engaging with the case bottom, and a lid resting on the peripheral wall at distance of the PTC heating plate. The case further comprises at least three openings traversed, in particular in a transversal direction, by three respective positioning protrusions provided in the cavity. The at least positioning protrusions are also configured to cooperate with the side of the PTC heating plate inside the case to maintain said PTC heating plate at distance from the case peripheral wall, preferably centered in the case.

A merit of the present invention is to provide a blowby heater of simple and cost effective design. The positioning protrusions, which ensure the fool-proof positioning of both the case and the PTC heating plate, can be easily arranged in the heater cavity, which is advantageous in terms of manufacture and mounting of the heater assembly sub-elements. The design is also robust, which will prove more economic in use.

The positioning protrusions may take various shapes, although they will preferably be formed as straight, narrow elements. For example, the positioning protrusions could extend from the bottom of the cavity, spaced from the walls, in the form of positioning pins, tenons or lugs. Preferably, the positioning protrusions are positioned to run along the cavity side wall, forming ribs of predetermined axial and radial extension.

According to one embodiment, the at least three openings in the case are located generally at the periphery of the case at a predetermined distance between each other.

Preferable, the at least three openings are situated in the peripheral wall of the case.

In embodiments, the body comprises a separation wall to the conduit, said wall being situated at the bottom of the heater cavity, the case bottom engaging and/or being attached to the separation wall, the projecting inside the heater cavity from the separation wall and extending in axial direction along the heater cavity side wall. The conductive conduit may have a flat portion facing the separation wall.

In embodiments, the case bottom is attached to the separation wall by means of glue.

Advantageously, the lid comprises at least one notch on the side, preferably two notches, to cooperate with at least one longer of the positioning protrusions provided inside the heater cavity and which extends along the heater cavity side wall beyond the case.

This longer positioning protrusion is over 3 mm longer than the other positioning protrusions, preferably more than 30% longer than said other positioning protrusion.

Advantageously, the body is made from plastic material and the positioning protrusions are integral with the body.

In embodiments, the blowby heater device further comprises a connector attached to the body, said connector being configured to close the heater cavity, the blowby heater device comprising also: a first helicoidal contact spring, located in a circular opening in the lid, with one end cooperating with the connector in working position and a second end pressing the PTC heating plate against the bottom of the case; a second helicoidal contact spring with one end cooperating with the connector in working position and a second end pressing the lid against the peripheral wall of the case. The first and second springs are typically attached to the connector.

In embodiments, the circular opening in the lid is off-center.

The body is preferably overmolding the conduit, in particular by injection molding.

According to preferred embodiments, the body comprises a connection portion, in particular for a crankcase of an automobile vehicle. The connection portion is of circular section adapted for a corresponding section of the conductive tube. The connection portion and/or the conductive conduit may be of different sections.

The above and other embodiments and aspects of the invention are also recited in the appended dependent claims.

### Brief Description of the Drawings

Further details and advantages of the invention will be apparent from the following description of a preferred embodiment of the invention which will now be described, by way of example, with reference to the accompanying drawings in which:
- Fig. 1 is an exploded view of a blowby heater according to an embodiment of the present invention;
- Fig. 2 is a sectional view II - II of the blowby heater of figure 1;
- Fig. 3 present the body of the blowby heater of figures 1 and 2 in -a- a top view and in -b- a sectional view IIIb - IIIb.

### Description of a Preferred Embodiment

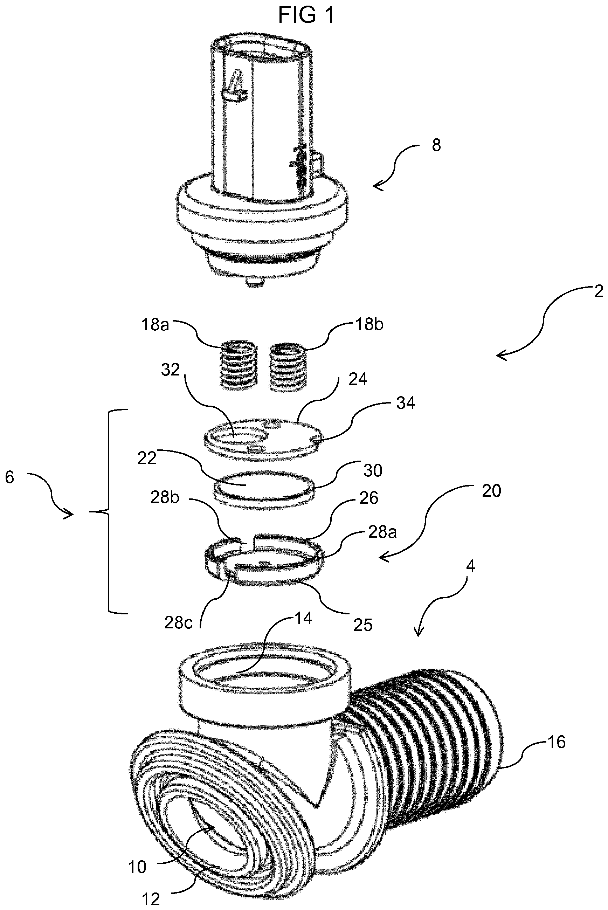

Figure 1 is an exploded view of a blowby heater 2 according to one embodiment of the present invention. The blowby heater 2 comprises a body 4, a heater assembly 6 and a connector 8. The body has a passage defining an inner space 10, preferably extending in a longitudinal direction L, and receiving a conduit 12. The conduit is generally made of thermally conductive material, e.g. a metal or alloy. The body 4 also comprises a heater cavity 14, inside which the heater assembly 6 is mounted.. The body 4 is configured to form a thermal coupling between the heater assembly 6 and the conduit 12 in order to heat up the fluid circulating in the conduit 12, namely blowby fluid. The connector 8 is attached to the body 4 and closes the heater cavity 14.

As it will be understood, the heater cavity is designed as housing for the heater assembly. The cavity here has a cylindrical shape of circular cross-section; but, depending on the application, the cylindrical cavity may alternatively have an elliptical, square/rectangular or polygonal cross-section, i.e. other cylindrical shapes. It may be noted that the heater cavity is installed to face a lateral wall of the thermally conductive conduit 12, and will therefore extend along a direction generally transversal, noted T, to the conduit's longitudinal axis L.

The body 4 further comprises a connection portion 16, in particular for a crankcase of an automobile vehicle. As can be seen on this exploded view, the blowby heater 2 also comprises two helicoidal contact springs 18a and 18b that will be described below.

The heater assembly 6 comprises a case 20, a PTC heating plate 22 and a lid 24. The case 20 comprises a case bottom 25 and a peripheral wall 26; the lid 24 rests on the peripheral wall 26. The case defines a space or cavity for the location of the PTC heating plate 22 engaging with the case bottom 25.

In the present embodiment, the heater cavity 14 and the peripheral wall 26 of the case 20 have circular sections. The lid 24 is also of circular shape in order to engage with the peripheral wall 26. In particular the PTC heating plate 22 is also circular.

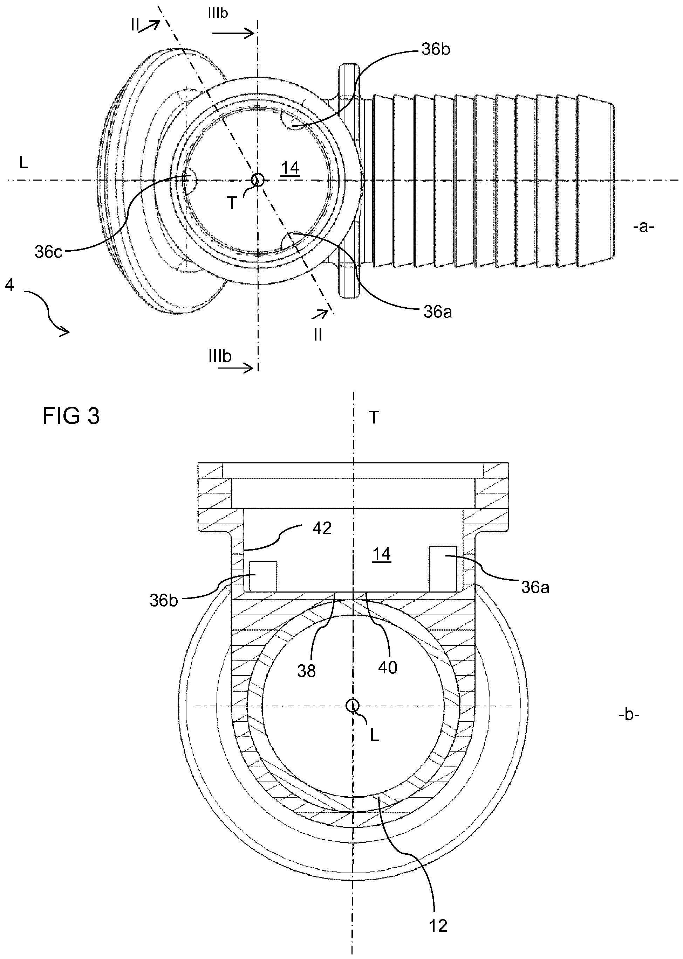

It shall be appreciated that the case 20 comprises three openings 28a, 28b and 28c. The heater cavity 14, in turn, comprises three positioning protrusions 36a, 36b and 36c (see Fig.3) passing through the three openings in the case. The positioning protrusions 36a, 36b and 36c facilitate the positioning and orientation of the case 20 in the heater cavity. In this particular embodiment where the case is circular, this feature is interesting as the three positioning protrusions engage positively with the case, which provides a robust lateral positioning in the heater cavity.

Preferably, the three openings 28a, 28b and 28c in the case 20 are located generally at the periphery of the case, at a predetermined distance from each other. This is favorable to the robustness of the positive positioning of the case in the heater cavity.

The three positioning protrusions 36a-36c in the heater cavity 14 are also configured to cooperate with the side 30 of the PTC heating plate in order to maintain it at distance from the peripheral wall 26 of the case. The three protrusions 36a, 36b and 36c allow maintaining the PTC plate centered in the case. This feature of the invention is interesting as it maintains in a robust manner the lateral position of the PTC heating plate 22 in the case of the heater assembly 6.

The positioning protrusions hence provide for a simple and efficient means of positioning both the casing and the PTC heating plate. They also form a fool proof mounting system. The positioning protrusions may take various shapes, although they will preferably be formed as straight, narrow elements. For example, the positioning protrusions could extend from the bottom of the cavity, spaced from the walls, in the form of positioning pins, tenons or lugs. Preferably, the positioning protrusions are positioned to run along the cavity side wall, forming ribs of predetermined axial and radial extension, as in the present embodiment.

The pair of helicoidal springs 18a and 18b (e.g. made from spring steel with a silver plating) help in maintaining the heater components in place and supply power to the PTC heating plate 22.

The first helicoidal contact spring 18a is located in a circular opening 32 in the lid 24, with one end cooperating with the connector 8 in working position and a second end pressing the PTC heating plate 22 against the bottom 25 of the case.

The second helicoidal contact spring 18b comprises one end which also cooperates with the connector in working position and a second end which is presses the lid against the peripheral wall of the case.

The opening 32 of the lid 24 in which the first spring 18a is located is off centered in order to allow enough space for the positioning of the springs 18a and 18b in a lateral direction. One can also notice on this view that the lid comprises one notch 34 on the side, one of the positioning protrusions (36a, Fig.3) projecting inside the heater cavity 14 being configured for engaging with the notch 34 in the lid in order to conveniently orientate the lid in the cavity. The lid being oriented in the heater cavity, the first contact spring 18a can be located in the opening of the lid without contacting the lid. The connector attachment system on the heater cavity 14 is configured for a positive orientation, though it is not visible on the figure.

For the heating function, power is supplied to the heater assembly via a pair of wires (not shown) arriving at the connector 8. Inside the connector, each contact spring 18a and 18b is in electrical contact with a respective wire. Heating will occur when a voltage is applied to the heater assembly via the wires.

The electrical circuit in the blowby heater includes the first contact spring 18a, in contact with the PTC heating plate 22, itself in contact with the case bottom 25, this latter being, via the peripheral wall, in contact with the lid 24, which is finally in contact with the second contact spring 18b. This electrical circuit is closed when the connector 8 is attached on the body 4 in a closed position.

The lid 24 and the case 20 may be made from metallic material, for example aluminum, aluminum alloy, copper or copper alloy , in particular with silver or nickel coating. The PTC heating plate 22 typically consists of a ceramic core with a coating, for example a silver oxide coating. Any appropriate PTC material may be used,.

Although the functioning principle of the blowby heater is well known to those skilled in the art, we can recall that the PTC heating plate is the heating source of the device when traversed by electrical current, and that the case 20 which is engaged by the PTC heater element 22 is the heat radiating element of the device.

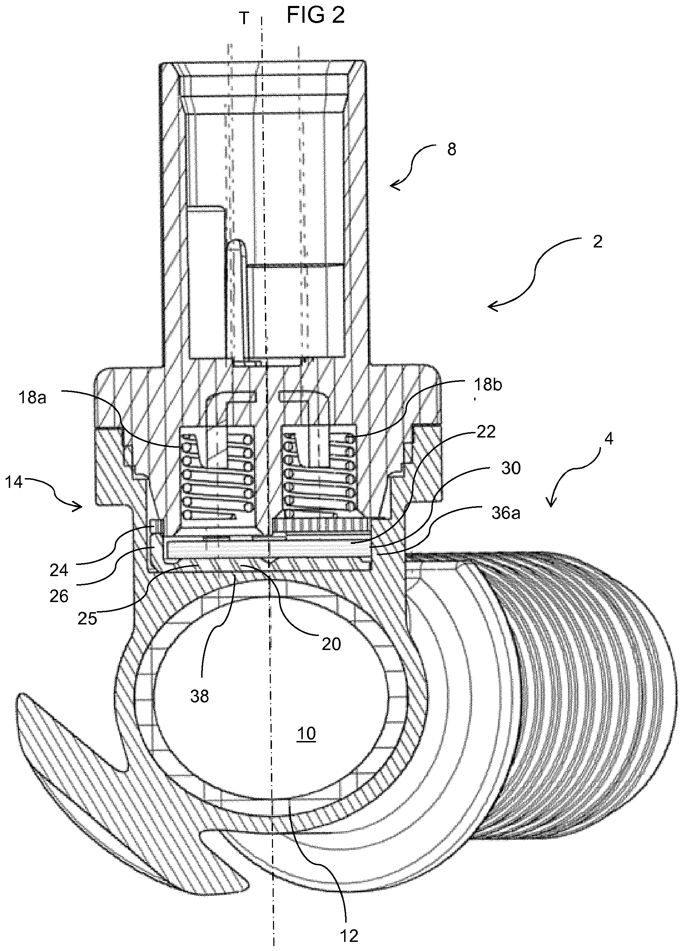

Figure 2 is a cross sectional view of the blowby heater 2. From the bottom to the top, one can identify: the body 4 with the inner space 10 extending longitudinally and receiving the fluid conduit 12; the heater cavity 14 receiving the heating assembly; the two helicoidal springs 18a and 18b extending transversally; and finally the connector 8 shown in a position attached to the body 4 and thus closing the heater cavity 14.

As can be seen, the PTC heating plate 22 engages with the bottom 25 of the case 20 and is maintained in the direction of the cavity axis T by the extension force provided by the first contact spring 18a. One may notice the location of the first contact spring 18a in the opening 32 of the lid. One can also see the lid 24 resting on the peripheral wall 26 of the case 20 and maintained (in the direction of axis T) by the extension force provided by the second contact spring 18b.

This cross sectional view presents one 36a of the three rib-forming positioning protrusions projecting in the heater cavity. The rib 36a in question can be noticed in this view in the bottom right corner of the heater cavity. Rib 36a traverses one of the three openings in the case of the heater assembly and also engages with the side 30 of the PTC heating plate. It may further be noticed that rib 36a extends beyond the case 20 (in the direction of cavity axis T) and engages with the peripheral notch 34 provided in lid 24 for the lid orientation. Rib 36a is thus longer than the two other ribs 36b and 36c.

The following paragraphs describe the arrangement of the thermal coupling between the heater assembly 6 and the conduit 12.

It may be noted that, although in the drawings the blowby heater device is shown with the conduit 12 arranged in the cavity, because the heater body is preferably molded over the conduit, this should not be construed in a limiting manner. The blowby heater body can be manufactured alone, to be subsequently assembled with a conduit, e.g. by threading or pushing in force.

The body comprises a separation wall 38 to the conduit which is situated on the bottom of the heater cavity. In this particular embodiment, the three rib-forming protrusions inside the heater cavity run from the separation wall and extend along the heater cavity side wall in the axial direction T of the cavity. This feature of the invention is interesting as it improves the robustness of the design, for example it prevents the three ribs from being teared off during the mounting of the heater assembly or during manufacturing of the body.

In the present embodiment, the body 4 is molded in plastic material and the three ribs / protrusions 36a-36c are integral with the body. The position of the ribs protruding from the separation wall and extending along the side wall of the heater cavity is favorable for example for not being teared off during molding.

The separation wall 38 forms the region of thermal coupling between the heater assembly and the conduit. One can see that the bottom 25 of the case engages with the separation wall 38 and the openings in the peripheral wall, which are traversed by the positioning protrusions, although only one is visible in the figure. The case bottom can be attached to the bottom of the heater cavity by a layer of resin or glue. This provides a simple and robust construction. In particular, the layer of attachment material can penetrate the openings in the case, which is favorable for the stability of mounting.

The body 4 in plastic can be overmolding the conduit 12, for example by use of injection molding.

The first 18a and second 18b springs can be attached to the connector 8.

The connector 8 and/or the body 4 may be made from any appropriate plastic material, e.g. PBT or PA.

Figure 3 illustrates the body 4 of the blowby heater with a top view on the top - a - of the drawing sheet and cross sectional view IIIb-IIIb on the bottom - b -. One can see on these two views the heater cavity 14 with the separation wall 38 to the conduit in the bottom 40 of the cavity, the side wall 42 of the cavity and the three ribs 36a, 36b and 36c projecting inside the heater cavity 14. The ribs extend towards the center of the cavity and have a rounded cross-sectional shape facilitating an isostatic positioning of the PTC heater plate. The three ribs erect straight in the cavity direction T and are positioned at 120° around the direction T Rib 36a, which is designed to cooperate with the lid above the case, is longer (in the cavity axis direction T) than the other ribs 36b and 36c, by at least 3 mm; it can be over 30% longer than the other ribs. More generally the axial lengths, and radial extension, of the protrusions (including those of the longer protrusion) will be adapted according the case and lid stack-up configuration, which may vary depending on the application.

## Claims

1. Blowby heater device (2) for a conductive conduit (12) receiving a fluid, said heater device comprising:
a body (4) with an inner space (10) extending in a longitudinal direction (L) for accommodating the conduit (12), said body further comprising a heater cavity (14); and
a heater assembly (6) located inside the heater cavity (14), the body (4) being configured to provide a thermal coupling between said heater assembly (6) and the conduit (12);
wherein the heater assembly (6) comprises a case (20) with a case bottom (25) and a peripheral wall (26), a PTC heating plate (22) engaging with the case bottom (25), a lid (24) resting on the peripheral wall (26) at distance of the PTC heating plate (22); and **characterised in that** the case (20) comprises at least three openings (28a, 28b, 28c) traversed by three respective positioning protrusions (36a, 36b, 36c) provided in the cavity (14); and
the positioning protrusions (36a, 36b, 36c) being also configured to cooperate with the side (30) of the PTC heating plate (22) inside the case to maintain said PTC heating plate at distance from the case peripheral wall (26), preferably centered in the case.

2. Blowby heater device (2) according to claim 1, wherein the at least three openings (28a, 28b, 28c) in the case are located generally at the periphery of the case (20) at a predetermined distance between each other.

3. Blowby heater device (2) according to claim 1 or 2, wherein the at least three openings (28a, 28b, 28c) are situated in the peripheral wall (26) of the case.

4. Blowby heater device (2) according to any one of claim 1 to 3, wherein the body (4) comprises a separation wall (38) to the conduit (12), said wall being situated at the bottom (40) of the heater cavity (14), the case bottom (25) being attached to said separation wall (38), the protrusions (36a, 36b, 36c) projecting inside the heater cavity (14) from the separation wall (38) and extending in the axial direction of the cavity along the heater cavity side wall (42).

5. Blowby heater device (2) according to claim 4, wherein the case bottom (25) is attached to the separation wall (38) by means of glue.

6. Blowby heater device (2) according to any one of claims 1 to 6, wherein the lid (24) comprises at least one notch (34) on the side, preferably two notches, to cooperate with at least one longer (36a) of the positioning protrusions projecting inside the heater cavity (14) and extending along the heater cavity side wall (42) beyond the case (20).

7. Blowby heater device (2) according to claim 6, wherein the at least one longer protrusion (36a) is over 3 mm longer than the other lugs (36b, 36c), preferably more than 30% longer than said other lugs.

8. Blowby heater device (2) according to any one of claims 1 to 7, wherein the body (4) is made from plastic material, the positioning protrusions (36a, 36b, 36c) being integral with the body (4).

9. Blowby heater device (2) according to any one of claims 1 to 8, wherein it further comprises a connector (8) attached to the body (4), said connector being configured to close the heater cavity (14), the blowby heater device comprising also:
a first helicoidal contact spring (18a), located in a circular opening (32) in the lid (24), with one end cooperating with the connector (8) in working position and a second end pressing the PTC heating (22) plate against the case bottom (25);
a second helicoidal contact spring (18b) with one end cooperating with the connector (8) in working position and a second end pressing the lid (24) against the peripheral wall (26) of the case (20).

10. Blowby heater device (2) according to any one of claims 6 and 7, and claim 9, wherein the circular opening (32) in the lid is off-center.

11. Blowby heater device (2) according claim 9 or 10, wherein the first (18a) and second (18b) springs are attached to the connector (8).

12. Blowby heater device (2) according to any one of claims 1 to 11, wherein the body (4) is overmolding the conduit (12), preferably by injection molding.

13. Blowby heater device (2) according to any one of claims 1 to 12, wherein the lid (32) and the case (20) are made from metallic material, preferably aluminum, aluminum alloy, copper or copper alloy, in particular with silver or nickel coating.

14. Blowby heater device (2) according to any one of claims 1 to 13, wherein the PTC heating plate (22) consists of a ceramic core with a coating.

15. Blowby heater device (2) according to any one of claims 1 to 14, wherein the body (4) comprises a connection portion (16), in particular for a crankcase of an automobile vehicle.

## Patentansprüche

1. Blowby-Heizungsvorrichtung (2) für einen Leitungskanal (12), die ein Fluid aufnimmt, wobei die Heizungsvorrichtung umfasst:
einen Körper (4) mit einem Innenraum (10), der sich zur Aufnahme des Kanals (12) in einer Längsrichtung (L) erstreckt, wobei der Körper ferner einen Heizungshohlraum (14) umfasst; und
einen Heizungsaufbau (6), der sich innerhalb des Heizungshohlraums (14) befindet, wobei der Körper (4) dafür ausgelegt ist, eine Wärmekopplung zwischen dem Heizungsaufbau (6) und des Kanals (12) bereitzustellen;
wobei der Heizungsaufbau (6) ein Gehäuse (20) mit einem Gehäuseboden (25) und einer Umfangswand (26) umfasst, wobei eine PTC-Heizplatte (22) mit dem Gehäuseboden (25) im Eingriff ist, wobei in einem Abstand zu der PTC-Heizplatte (22) ein Deckel (24) auf der Umfangswand (26) ruht; und **dadurch gekennzeichnet, dass**
das Gehäuse (20) mindestens drei Öffnungen (28a, 28b, 28c) umfasst, durch die drei jeweilige Positionierungsvorsprünge (36a, 36b, 36c), die in dem Hohlraum (14) vorgesehen sind, hindurch verlaufen; und
die Positionierungsvorsprünge (36a, 36b, 36c) auch dafür ausgelegt sind, mit der Seite (30) der PTC-Heizplatte (22) in dem Gehäuse zusammenzuwirken, um die PTC-Heizplatte in einem Abstand von der Gehäuseumfangswand (26), vorzugsweise in dem Gehäuse zentriert, zu halten.

2. Blowby-Heizungsvorrichtung (2) gemäß Anspruch 1, wobei sich die mindestens drei Öffnungen (28a, 28b, 28c) in dem Gehäuse im Allgemeinen am Umfang des Gehäuses (20) in einem vorbestimmten Abstand zwischen einander befinden.

3. Blowby-Heizungsvorrichtung (2) gemäß Anspruch 1 oder 2, wobei sich die mindestens drei Öffnungen (28a, 28b, 28c) in der Umfangswand (26) des Gehäuses befinden.

4. Blowby-Heizungsvorrichtung (2) gemäß einem der Ansprüche 1 bis 3, wobei der Körper (4) eine Trennwand (38) zum Kanal (12) umfasst, wobei sich die Wand am Boden (40) des Heizungshohlraums (14) befindet, wobei der Gehäuseboden (25) an der Trennwand (38) angebracht ist, wobei die Vorsprünge (36a, 36b, 36c) von der Trennwand (38) in den Heizungshohlraum (14) ragen und sich in axialer Richtung des Hohlraums entlang der Heizungshohlraum-Seitenwand (42) erstrecken.

5. Blowby-Heizungsvorrichtung (2) gemäß Anspruch 4, wobei der Gehäuseboden (25) mittels Leim an der Trennwand (38) angebracht ist.

6. Blowby-Heizungsvorrichtung (2) gemäß einem der Ansprüche 1 bis 6, wobei der Deckel (24) mindestens eine Kerbe (34), vorzugsweise zwei Kerben auf der Seite umfasst, um mit mindestens einem längeren (36a) der Positionierungsvorsprünge zusammenzuwirken, die in dem Heizungshohlraum (14) vorstehen und sich entlang der Heizungshohlraum-Seitenwand (42) über das Gehäuse (20) hinaus erstrecken.

7. Blowby-Heizungsvorrichtung (2) gemäß Anspruch 6, wobei der mindestens eine längere Vorsprung (36a) über 3 mm länger als die anderen Ansätze (36b, 36c), vorzugsweise mehr als 30 % länger als die anderen Ansätze ist.

8. Blowby-Heizungsvorrichtung (2) gemäß einem der Ansprüche 1 bis 7, wobei der Körper (4) aus einem Kunststoffmaterial gefertigt ist, wobei die Positionierungsvorsprünge (36a, 36b, 36c) mit dem Körper (4) einstückig ausgebildet sind.

9. Blowby-Heizungsvorrichtung (2) gemäß einem der Ansprüche 1 bis 8, wobei sie ferner ein an dem Körper (4) angebrachtes Verbindungsstück (8) umfasst, wobei das Verbindungsstück dafür ausgelegt ist, den Heizungshohlraum (14) zu schließen, wobei die Blowby-Heizungsvorrichtung des Weiteren umfasst:
eine erste schraubenförmige Kontaktfeder (18a), die sich in einer kreisförmigen Öffnung (32) in dem Deckel (24) befindet, wobei ein Ende in der Arbeitsposition mit dem Verbindungsstück (8) zusammenwirkt und ein zweites Ende die PTC-Heizplatte (22) gegen den Gehäuseboden (25) presst;
eine zweite schraubenförmige Kontaktfeder (18b), wobei ein Ende in der Arbeitsposition mit dem Verbindungsstück (8) zusammenwirkt und ein zweites Ende den Deckel (24) gegen die Umfangswand (26) des Gehäuses (20) presst.

10. Blowby-Heizungsvorrichtung (2) gemäß einem der Ansprüche 6 und 7 und Anspruch 9, wobei die kreisförmige Öffnung (32) in dem Deckel außermittig liegt.

11. Blowby-Heizungsvorrichtung (2) gemäß Anspruch 9 oder 10, wobei die erste (18a) und die zweite Feder (18b) an dem Verbindungsstück (8) angebracht sind.

12. Blowby-Heizungsvorrichtung (2) gemäß einem der Ansprüche 1 bis 11, wobei der Körper (4) vorzugsweise durch Spritzguss über dem Kanal (12) geformt ist.

13. Blowby-Heizungsvorrichtung (2) gemäß einem der Ansprüche 1 bis 12, wobei der Deckel (32) und das Gehäuse (20) aus einem metallischen Material gefertigt sind, vorzugsweise aus Aluminium, einer Aluminiumlegierung, Kupfer oder einer Kupferlegierung, insbesondere mit einer Silber- oder Nickelbeschichtung.

14. Blowby-Heizungsvorrichtung (2) gemäß einem der Ansprüche 1 bis 13, wobei die PTC-Heizplatte (22) aus einem keramischen Kern mit einer Beschichtung besteht.

15. Blowby-Heizungsvorrichtung (2) gemäß einem der Ansprüche 1 bis 14, wobei der Körper (4) einen Verbindungsabschnitt (16), insbesondere für ein Kurbelgehäuse eines Kraftfahrzeugs, umfasst.

## Revendications

1. Dispositif de chauffage (2) de fluide de fuite pour un conduit conducteur (12) recevant un fluide, ledit dispositif de chauffage comprenant :
un corps (4) pourvu d'un espace intérieur (10) s'étendant dans une direction longitudinale (L) permettant de loger le conduit (12), ledit corps comprenant en outre une cavité chauffante (14) ; et
un ensemble chauffant (6) situé à l'intérieur de la cavité chauffante (14), le corps (4) étant configuré pour fournir un couplage thermique entre ledit ensemble chauffant (6) et le conduit (12) ;
dans lequel l'ensemble chauffant (6) comprend un boîtier (20) pourvu d'un fond de boîtier (25) et d'une paroi périphérique (26), d'une plaque chauffante PTC (22) en prise avec le fond du boîtier (25), d'un couvercle (24) reposant sur la paroi périphérique (26) à distance de la plaque chauffante PTC (22) ; et **caractérisé en ce que**
le boîtier (20) comprend au moins trois ouvertures (28a, 28b, 28c) traversées par trois saillies (36a, 36b, 36c) de positionnement respectives fournies dans la cavité (14) ; et
les saillies (36a, 36b, 36c) de positionnement sont également configurées pour coopérer avec le côté (30) de la plaque chauffante PTC (22) à l'intérieur du boîtier afin de maintenir ladite plaque chauffante PTC à distance de la paroi périphérique (26) du boîtier, de préférence au centre du boîtier.

2. Dispositif de chauffage (2) de fluide de fuite selon la revendication 1, dans lequel les au moins trois ouvertures (28a, 28b, 28c) dans le boîtier sont situées généralement au niveau de la périphérie du boîtier (20) à une distance prédéterminée les unes entre les autres.

3. Dispositif de chauffage (2) de fluide de fuite selon la revendication 1 ou 2, dans lequel les au moins trois ouvertures (28a, 28b, 28c) sont situées dans la paroi périphérique (26) du boîtier.

4. Dispositif de chauffage (2) de fluide de fuite selon l'une quelconque des revendications 1 à 3, dans lequel le corps (4) comprend une paroi de séparation (38) sur le conduit (12), ladite paroi étant située au fond (40) de la cavité chauffante (14), le fond du boîtier (25) étant fixé à ladite paroi de séparation (38), les saillies (36a, 36b, 36c) dépassant à l'intérieur de la cavité chauffante (14) de la paroi de séparation (38) et s'étendant dans la direction axiale de la cavité le long de la paroi latérale de la cavité chauffante (42).

5. Dispositif de chauffage (2) de fluide de fuite selon la revendication 4, dans lequel le fond de boîtier (25) est fixé à la paroi de séparation (38) au moyen d'une colle.

6. Dispositif de chauffage (2) de fluide de fuite selon l'une quelconque des revendications 1 à 6, dans lequel le couvercle (24) comprend au moins une encoche (34) sur le côté, de préférence deux encoches, pour coopérer avec au moins une plus longue (36a) des saillies de positionnement dépassant à l'intérieur de la cavité chauffante (14) et s'étendant le long de la paroi latérale (42) de la cavité chauffante au-delà du boîtier (20).

7. Dispositif de chauffage (2) de fluide de fuite selon la revendication 6, dans lequel l'au moins une plus longue saillie (36a) est plus longue de plus de 3 mm par rapport aux autres tenons (36b, 36c), de préférence plus longue de plus de 30 % par rapport auxdits autres tenons.

8. Dispositif de chauffage (2) de fluide de fuite selon l'une quelconque des revendications 1 à 7, dans lequel le corps (4) est composé d'un matériau plastique, les saillies (36a, 36b, 36c) de positionnement étant solidaires au corps (4).

9. Dispositif de chauffage (2) de fluide de fuite selon l'une quelconque des revendications 1 à 8, comprenant en outre un connecteur (8) fixé au corps (4), ledit connecteur étant configuré pour fermer la cavité chauffante (14), le dispositif de chauffage (2) de fluide de fuite comprenant également :
un premier ressort de contact hélicoïdal (18a), situé dans une ouverture circulaire (32) du couvercle (24), dont une extrémité coopère avec le connecteur (8) en position de travail et une seconde extrémité presse la plaque chauffante PTC (22) contre le fond du boîtier (25) ;
un second ressort de contact hélicoïdal (18b) dont une extrémité coopère avec le connecteur (8) en position de travail et une seconde extrémité presse le couvercle (24) contre la paroi périphérique (26) du boîtier (20).

10. Dispositif de chauffage (2) de fluide de fuite selon l'une quelconque des revendications 6 et 7, et la revendication 9, dans lequel l'ouverture circulaire (32) dans le couvercle est décentrée.

11. Dispositif de chauffage (2) de fluide de fuite selon la revendication 9 ou 10, dans lequel le premier (18a) et le second (18b) ressort sont fixés au connecteur (8).

12. Dispositif de chauffage (2) de fluide de fuite selon l'une quelconque des revendications 1 à 11, dans lequel le corps (4) surmoule le conduit (12), de préférence par un moulage par injection.

13. Dispositif de chauffage (2) de fluide de fuite selon l'une quelconque des revendications 1 à 12, dans lequel le couvercle (32) et le boîtier (20) sont composés d'un matériau métallique, de préférence en aluminium, en alliage d'aluminium, en cuivre ou en alliage de cuivre, en particulier avec un revêtement en argent ou en nickel.

14. Dispositif de chauffage (2) de fluide de fuite selon l'une quelconque des revendications 1 à 13, dans lequel la plaque chauffante PTC (22) se compose d'un coeur en céramique avec un revêtement.

15. Dispositif de chauffage (2) de fluide de fuite selon l'une quelconque des revendications 1 à 14, dans lequel le corps (4) comprend une partie de connexion (16), en particulier pour un carter d'un véhicule automobile.
